# EUROPÄISCHE PATENTSCHRIFT

(11) **EP 2 646 940 B1**
(45) Veröffentlichungstag und Bekanntmachung des Hinweises auf die Patenterteilung: **15.10.2014**
(21) Anmeldenummer: 11817410.1
(22) Anmeldetag: 06.12.2011
(51) Int. Cl.: G06F 21/00

(54) **VERFAHREN ZUR ORTSBESCHRÄNKTEN ANZEIGE LESBARER INHALTE AUF EINEM MOBILEN LESEGERÄT**
METHOD FOR DISPLAYING READABLE CONTENTS ON A MOBILE READING DEVICE IN A LOCATION-RESTRICTED MANNER
PROCÉDÉ D'AFFICHAGE LOCALEMENT RESTREINT DE CONTENUS LISIBLES SUR UN LECTEUR MOBILE

(30) Priorität: 03.12.2010 DE 102010053651
(43) Veröffentlichungstag der Anmeldung: 09.10.2013
(73) Patentinhaber: TXTR GmbH, 10119 Berlin (DE)
(72) Erfinder: STEINHAUSER, Andreas, 10245 Berlin (DE)
(74) Vertreter: Jungblut & Seuss
(86) Internationale Anmeldenummer: PCT/IB2011/002940
(87) Internationale Veröffentlichungsnummer: WO 2012/073108

(56) Entgegenhaltungen:
- EP-A2- 1 583 017
- US-A1- 2007 168 294
- MARTIN JAN SURMINEN ET AL: "Location-based DRM using WiFi access points", COMMUNICATIONS AND INFORMATION TECHNOLOGIES, 2007. ISCIT '07. INT ERNATIONAL SYMPOSIUM ON, IEEE, PI, 1. Oktober 2007 (2007-10-01), Seiten 882-886, XP031166585, ISBN: 978-1-4244-0976-1 in der Anmeldung erwähnt
- AHREN STUDER ET AL: "Mobile user location-specific encryption (MULE)", PROCEEDINGS OF THE THIRD ACM CONFERENCE ON WIRELESS NETWORK SECURITY, WISEC '10, 1. Januar 2010 (2010-01-01), Seite 151, XP55022665, New York, New York, USA DOI: 10.1145/1741866.1741892 ISBN: 978-1-60-558923-7
- MUHLBAUER ET AL: "Location constraints in digital rights management", COMPUTER COMMUNICATIONS, ELSEVIER SCIENCE PUBLISHERS BV, AMSTERDAM, NL, Bd. 31, Nr. 6, 26. Januar 2008 (2008-01-26), Seiten 1173-1180, XP022558971, ISSN: 0140-3664
- KINDBERG T ET AL: "Context authentication using constrained channels", MOBILE COMPUTING SYSTEMS AND APPLICATIONS, 2002. PROCEEDINGS FOURTH IE EE WORKSHOP ON 20-21 JUNE 2002, PISCATAWAY, NJ, USA,IEEE, 20. Juni 2002 (2002-06-20), Seiten 14-21, XP010592540, ISBN: 978-0-7695-1647-9

## Beschreibung

Die vorliegende Erfindung betrifft ein System und Verfahren, durch welches die Verfügbarkeit von lesbaren Inhalten (Bücher, Zeitschriften, Dokumente) ortsgebunden beschränkt werden kann. Des Weiteren betrifft die Erfindung ein elektronisches Endgerät, insbesondere mobiles Lesegerät mit Mitteln zur Durchführung dieses Verfahrens, sowie die Verwendung eines solchen elektronischen Endgerätes. Es wird die Priorität der deutschen Anmeldung Nr. 102010053651.2 beansprucht.

Mobile Lesegeräte, sogenannte "E-Reader", sind seit einiger Zeit auf dem Markt. Auch tragbare Computer und Mobiltelefone, sogenannte "Smartphones" können als mobile Lesegeräte dienen. Mobile Lesegeräte zeichnen sich dadurch aus, dass sie die Möglichkeit bieten, Bücher, Zeitschriften und andere schriftliche Dokumente in digitaler Form auf einem Display anzuzeigen und somit lesbar zu machen, wobei bis zu mehrere hundert Dokumente auf einem mobilen Lesegerät gespeichert werden können. Die Dokumente können entweder über eine physische Schnittstelle (z.B. USB) auf das Lesegerät übertragen werden oder drahtlos per Mobilfunk oder WLAN angefordert werden. Lesbarer Inhalt ist entweder uneingeschränkt oder nach Bezahlung zugänglich und ist nach dem Bezug ohne weitere Einschränkung auf dem Gerät verfügbar. So kann ein Nutzer beispielsweise ein oder mehrere Dokumente, z.B. vollständige Bücher, auf sein mobiles Lesegerät laden und an beliebigen Orten lesen.

Nach dem Stand der Technik sind Verfahren bekannt, durch die lesbarer Inhalt an bestimmten Orten an ein Lesegerät übertragen wird. Die Offenlegungsschrift [1] beschreibt ein mobiles Gerät, das in der Lage ist seinen Aufenthaltsort zu erkennen und, soweit verfügbar, ortsbezogenen Inhalt zu empfangen. Das Gerät kann dabei feststellen, ob der Ort bereits aufgesucht und der Inhalt schon empfangen wurde, um eine erneute Übertragung zu vermeiden. So wird gewährleistet, dass der Benutzer eines solchen Gerätes nur neuen bzw. aktuellen Inhalt empfängt. Eine weitere Druckschrift [2] beschreibt den Einsatz von derartiger Technologie in einem Museum, wobei Informationen zu einem Ausstellungsstück in dessen Nähe auf einem Lesegerät empfangen und über einen Webbrowser angezeigt werden und auch nach Verlassen des Museums aufgerufen werden können. Zur Feststellung des Aufenthaltsortes können verschiedene Technologien verwendet werden. Zum Beispiel kann das Lesegerät ein Funksignal (RFID [3], WLAN [4]) empfangen oder seine Position per GPS [1] bestimmt werden.

Die oben aufgeführten Anwendungen berücksichtigen allerdings nicht, was mit dem ortsbezogenen Inhalt geschieht, sobald der Ort verlassen wird. In den oben aufgeführten Fällen verbleibt der Inhalt auf dem Lesegerät und kann so zu einem späteren Zeitpunkt auch an anderen Orten eingesehen werden.

Es gibt allerdings zahlreiche Anwendungsfälle, in denen Wert darauf gelegt wird, dass lesbarer Inhalt dem Leser nur so lange zur Verfügung gestellt wird, solange er sich in einem bestimmten Raum oder an einem bestimmten Ort aufhält. Nach Verlassen dieses Ortes oder Raumes soll dieser Inhalt dem Leser nicht weiter zugänglich sein. Beschränkt werden soll hiermit die Verfügbarkeit von beispielsweise sicherheitsrelevanten, lizensierten oder urheberrechtlich geschützten Inhalten.

Beispiele für den Bedarf derartiger Lösungen sind vertrauliche bzw. sicherheitsrelevante Inhalte. Beispielsweise könnte eine Behörde ihre Mitarbeiter mit derartigen Lesegeräten ausstatten wollen, die in den Diensträumen der Behörden Dokumente lesbar machen, die aber bei versehentlicher oder absichtlicher Mitnahme außerhalb der Diensträume die Inhalte nicht mehr anzeigen.

Auch bei größeren Besprechungen bzw. Konferenzen kann es Fälle geben, bei denen vertrauliche Dokumente (z.B. Präsentationen und/oder ergänzende Dokumente) auf ein mobiles Lesegerät übertragen werden. Sofern der übertragene Inhalt vertraulichen oder sicherheitsrelevanten Charakter aufweist (oder urheberrechtlich geschützt ist) sollen die Inhalte bei Verlassen der Konferenzräume gelöscht werden. Ein System, welches gleichzeitig die Lesbarkeit vieler Dokumente durch einen oder mehrere Nutzer sichert, gleichzeitig aber die Vertraulichkeit wahrt, indem es die Dokumente löscht, sobald ein bestimmter Ort verlassen wird, könnte deutliche Vorteile der Nutzung bringen.

Es ist Aufgabe der hier beschriebenen Erfindung, zu gewährleisten, dass ortsabhängig bezogener Inhalt der auf einem mobilen Lesegerät angezeigt werden kann, nicht mehr verfügbar ist, sobald das Lesegerät den jeweiligen Ort verlässt.

Der bekannte Stand der Technik zeigt hierfür keine Lösungen auf.

Es besteht daher Bedarf an einem System und Verfahren zur ortsbeschränkten Anzeige lesbarer Inhalte auf einem mobilen Display, mit dem die Nachteile des bisherigen Standes der Technik überwunden werden können. Die Lösung dieser Aufgabe erfolgt durch die in den Patentansprüchen gekennzeichneten Gegenstände, insbesondere durch das Verfahren gemäß Anspruch 1. Weiterentwicklungen dieses Grundgedankens sind durch die Unteransprüche gekennzeichnet.

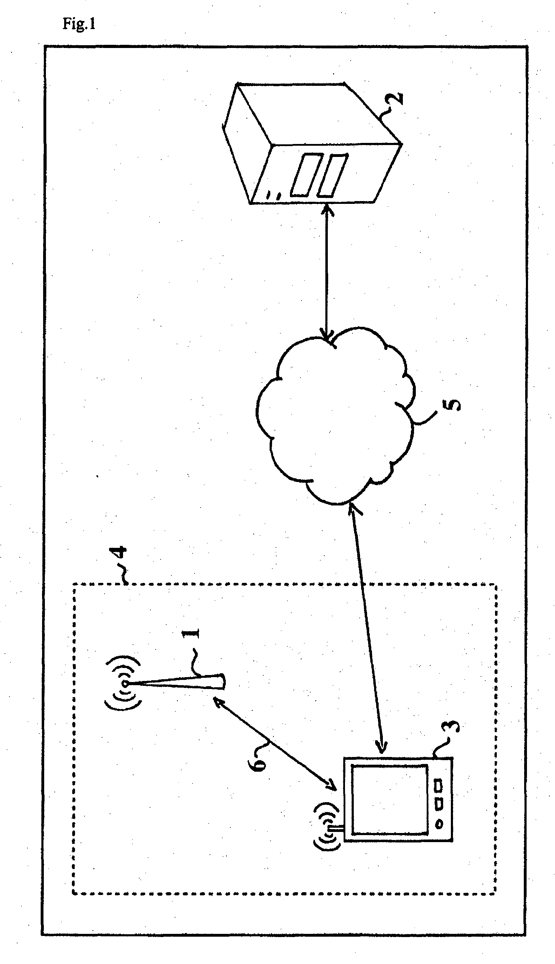

Figur 1 stellt den prinzipiellen Aufbau der Systeminfrastruktur dar.

Erfindungsgemäß soll ein System zur ortsbeschränkten Anzeige lesbarer Inhalte auf einem mobilen Display enthalten:
a) mindestens einen Objektlokator (1) dadurch gekennzeichnet, dass dieser ein Signal aussendet, das ihn eindeutig identifiziert. Zur Durchführung des erfindungsgemäßen Verfahrens kann der Objektlokator des weiteren über eine Empfangseinheit für Funksignale und eine Datenverarbeitungseinheit verfügen.
b) mindestens einen Server (2), dadurch gekennzeichnet, dass auf ihm alle zur Durchführung des Verfahrens notwendigen Daten abgelegt sind. Diese Daten umfassen den Inhalt, der ortsbeschränkt zur Verfügung stehen soll, sowie Richtlinien, Werte und Algorithmen zur Anwendung von Authentifizierungs- und Verschlüsselungsmethoden, die für das erfindungsgemäße Verfahren vonnöten sind. Des weiteren verfügt der Server über eine Anbindung an ein Kommunikationsnetz (kabellos oder drahtgebunden) (5).
c) mindestens ein tragbares Lesegerät (3), das den ortsbeschränkten lesbaren digitalen Inhalt auf einem Display darstellen kann. Das Lesegerät verfügt über eine Datenverarbeitungseinheit, sowie über mindestens eine Sende- und Empfangseinheit und eine Anbindung an ein Kommunikationsnetz, um zur Durchführung des hier vorgestellten Verfahrens mit Objektlokator und Server kommunizieren zu können (6, 5).

Das erfindungsgemäße System ist dadurch gekennzeichnet, dass der Objektlokator (1) an dem Ort bzw. in dem Raum (4) angebracht ist, wo ortsgebunden beschränkt lesbarer Inhalt zur Verfügung gestellt werden soll. Der ortsgebunden beschränkt verfügbare lesbare Inhalt ist auf einem Server (2) abgelegt und kann auf einem tragbaren Lesegerät (3) angezeigt werden.

Der ortsgebunden beschränkt verfügbare Inhalt soll in verschlüsselter Form von dem Server an das Lesegerät übertragen werden und kann nur mithilfe eines vom Objektlokator empfangenen Signals auf dem Lesegerät entschlüsselt werden.

Ein zentrales Element des erfindungsgemäßen Systems ist der sogenannte Objektlokator (1), der den Raum bzw. Ort (4) an dem dieser sich befindet eindeutig kennzeichnet. In einer bevorzugten Ausführung handelt es sich bei dem Objektlokator (1) um eine Kurzstreckenfunk- (z.B. RFID, Bluetooth) Sende- und Empfangseinheit. Die Reichweite des Funksignals kann entsprechend der Größe des Raumes bzw. des Ortes (4) an dem ortsgebunden beschränkt lesbarer Inhalt zur Verfügung gestellt werden soll, festgelegt werden und kann zum Beispiel wenige Zentimeter oder mehrere Meter betragen. Entscheidend ist, dass der Objektlokator ein Signal (ID) (6) aussendet, das vom mobilen Lesegerät (3) empfangen werden kann und den Objektlokator eindeutig identifiziert. Dies kann derart umgesetzt werden, indem der Objektlokator in regelmäßigen zeitlichen Abständen ein Signal aussendet. Denkbar ist auch, dass der Objektlokator genau dann ein Signal aussendet, wenn er zuvor ein Signal von einem mobilen Lesegerät erhalten hat. Gleichermaßen sind Lichtsignale, Barcodes oder auch Schallsignale geeignet, die von einem tragbaren Lesegerät empfangen (6) und aufbereitet werden können. Des weiteren ist der Objektlokator in der Lage, Signale von einem tragbaren Lesegerät zu empfangen (6) und z.B. im Rahmen eines Authentifizierungsverfahrens weiter zu verarbeiten.

Für besonders sicherheitsrelevante Bereiche kann selbstverständlich auch eine Kombination von mehreren Objektlokatoren ausgewählt werden. Weiterhin ist es möglich, dass sich die vom Objektlokator ausgesendete ID in regelmäßigen oder unregelmäßigen Abständen ändert.

Informationen zu mit Objektlokatoren (1) ausgestatteten Orten bzw. Räumen (4), der an diesen Orten bzw. in diesen Räumen beschränkt verfügbare lesbare Inhalt, Zugriffsbestimmungen sowie Richtlinien und Werte für die Durchführung des erfindungsgemäßen Verfahrens befinden sich auf mindestens einem Server (2). Der Server verwaltet den ortsbeschränkten lesbaren Inhalt. Auf ihm sind die Identitäten der Objektlokatoren und ggf. Informationen zu den Orten, an denen sich Objektlokatoren befinden, und der an diesen Orten jeweils verfügbare Inhalt registriert und abgelegt. Des weiteren verfügt der Server über die Mittel um den Inhalt zu verschlüsseln und ein Authentifizierungsverfahren zwischen mobilem Lesegerät und Objektlokator zu initiieren. Des weiteren ist der Server über das Kommunikationsnetz (5) mit dem mobilen Lesegerät verbunden. Lesbarer Inhalt ist auf dem Server in elektronischer Form in den entsprechenden Datenformaten (u.a. epub, pdf, txt) abgelegt. In Abhängigkeit von der Identität des Objektlokators kann der Inhalt nach einem bestimmten Verfahren von dem Server verschlüsselt werden. Verschlüsselungsverfahren, digitale Signaturen oder Zertifikate die hierfür zum Einsatz kommen können, sind nach dem Stand der Technik bekannt. Ein Schlüssel zur Entschlüsselung kann dann beispielsweise aus dem vom Objektlokator ausgesendeten Signal auf dem Lesegerät generiert werden, um den Inhalt öffnen und anzeigen zu können. Dieser Schlüssel kann, wie das vom Objektlokator ausgesendete Signal auch, zeitabhängig und veränderlich sein.

In einer möglichen Ausführung des erfindungsgemäßen Systems, können Server und Objektlokator in einem Gerät integriert sein.

In einer weiteren Ausführung des erfindungsgemäßen Systems sind Objektlokator und Server Bestandteile einer mobilen Einheit, die beispielsweise eine Person bei sich führen kann, so dass Zugang zu lesbarem Inhalt nur in der Nähe dieser einen Person möglich ist.

Der Leser bzw. Nutzer bedient ein mobiles Lesegerät (3) mit den Mitteln zur Durchführung des erfindungsgemäßen Verfahrens. Das mobile Lesegerät verfügt über ein Display zur Anzeige von lesbarem Inhalt. Des weiteren verfügt es über mindestens einen Energiespeicher, z.B. Akku, Datenempfangs-, Datenaufbereitungs- und Datensendeeinheiten, die notwendig sind, um das erfindungsgemäße Verfahren umzusetzen. Das mobile Lesegerät (3) ist kabellos, also z.B. per WLAN oder Mobilfunk (5) mit dem Server verbunden. Es verfügt über eine Empfangseinheit (z.B. Antenne, Fotosensor, Mikrofon) mit der die vom Objektlokator (1) ausgehenden Signale empfangen (6) werden können. Des weiteren verfügt es über eine Sendeeinheit, um Signale zur Durchführung des hier beschriebenen Verfahrens an den Objektlokator zu senden (6).

Weiterhin enthält das mobile Lesegerät mindestens eine Einheit zur Löschung der Daten. Bevorzugt werden hierbei die Daten auf dem Lesegerät vollständig und nicht reproduzierbar gelöscht, wenn der Zugriff nicht mehr möglich sein soll. In weniger sicherheitsrelevanten Anwendungen ist es auch möglich, dass die Daten nicht tatsächlich gelöscht werden, sondern in verschlüsselter Form im Datenspeicher des mobilen Lesegerätes verbleiben, in Abwesenheit eines Objektlokators aber kein Signal zur Entschlüsselung mehr bereitsteht und die Inhalte daher nicht auf dem Display angezeigt werden können. Der Vorteil dieser weniger sicheren Ausführungsform ist, dass bei einem Wiedereintritt in einen vorbestimmten Raum keine erneute Datenübermittlung erfolgen muss, sondern die Daten lediglich wieder entschlüsselt werden müssen um angezeigt werden zu können.

Der Zugriff auf das Lesegerät kann zusätzlich gesichert werden, zum Beispiel durch eine PIN-Eingabe des Benutzers. Es kann zudem über eine eindeutige Gerätekennung (z.B. Seriennummer, IP-Adresse oder Nummer einer integrierten SIM-Karte) verfügen, anhand derer auch der Besitzer eines Lesegerätes identifiziert werden kann. Dadurch eignet sich das hier vorgestellte Verfahren auch dazu, die Verfügbarkeit von ortsbeschränkten Inhalt auf bestimmte Lesegeräte, und damit auf bestimmte Nutzer, zu beschränken.

Um die Sicherheit des Systems weiter zu erhöhen, kann das Lesegerät auch mit GPS ausgestattet sein. Der Aufenthaltsort des Lesegerätes kann dann zusätzlich oder ersatzweise zum Objektlokator anhand seines GPS-Signals validiert werden.

Grundprinzip des Verfahrens nach Patentanspruch 1 mittels der dargestellten Infrastruktur ist, dass das mobile Lesegerät (3) bei Annäherung an einen Objektlokator (1) von diesem eine eindeutige Kennung (4) empfängt, die es an den Server (2) übermittelt. Der Server ermittelt die Inhalte, die an diesem Ort beschränkt verfügbar sind. In Abhängigkeit des Objektlokators wird der Inhalt mit einer vorbestimmten Methode verschlüsselt. Mittels eines von dem Objektlokator ausgesendeten Signals können die verschlüsselt vorliegenden Inhalte auf dem Lesegerät entschlüsselt werden. Außer Reichweite des Objektlokators (1) bleiben diese Inhalte verschlüsselt und sind dann nicht mehr auf dem mobilen Lesegerät (2) lesbar.

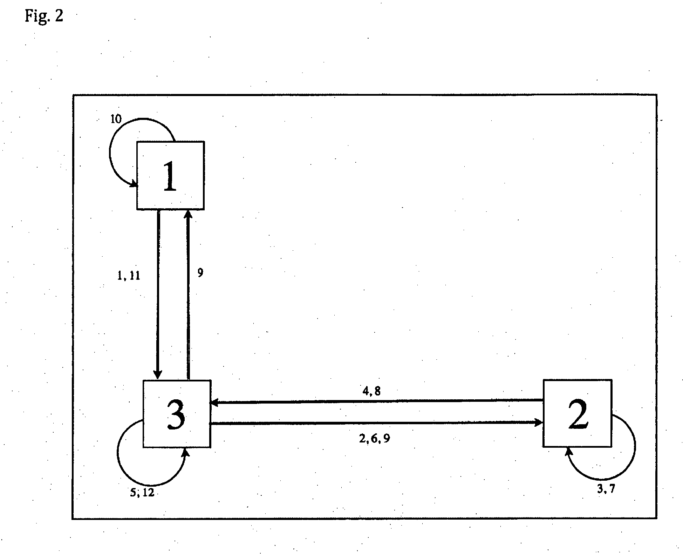

Eine beispielhafte Ausführung des gesamten Systems und des Betriebsverfahrens ist der Figur 2 zu entnehmen. Basierend auf der Infrastruktur bestehend aus Objektlokator (1), Server (2) und tragbarem Lesegerät (3), werden in Figur 2 die einzelnen möglichen Verfahrensschritte erläutert.
1: In der bevorzugten Ausführung handelt es sich bei dem Objektlokator um eine Kurzstreckenfunk- (z.B. Bluetooth, RFID) Sende- und Empfangseinheit. Der im Raum befindliche Objektlokator sendet in regelmäßigen Abständen ein Kurzstreckenfunksignal aus, mit dem er eine Kennzeichnung (Zahlencode, ID) übermittelt, die ihn eindeutig identifiziert. Die Reichweite des gesendeten Signals ist an die Größe des betreffenden Raumes angepasst. Denkbar ist ebenfalls, dass der Objektlokator seine Kennung erst dann aussendet, wenn er zuvor ein Signal von einem mobilen Lesegerät empfängt.
   Das mobile Lesegerät empfängt das vom Objektlokator ausgesendete Signal. In einer bevorzugten Ausführung des Lesegerätes, ist die Empfangseinheit ständig aktiv. Denkbar ist, dass sich das Gerät bei Funksignalempfang einschaltet, sollte es zuvor ausgeschaltet oder im Standby gewesen sein.
2: Das mobile Lesegerät übermittelt die empfangene ID an den Server und sendet gleichzeitig eine Anfrage zu den unter dieser ID verfügbaren Inhalten. In diesem Schritt kann zusätzlich eine Kennung des Lesegerätes übermittelt werden, anhand der festgestellt werden kann, ob das Lesegerät, d.h. sein Benutzer, zum Empfang des Inhaltes berechtigt ist.
3: Der Server ermittelt anhand der empfangenen Objektlokator-ID die unter dieser ID abgelegten beschränkt verfügbaren Inhalte. Liegen Einstellungen für eine eingeschränkte Nutzerberechtigung vor, wird die Kennung des Lesegerätes überprüft und festgestellt, ob dieses zum Empfang des Inhaltes berechtigt ist.
4: Der Server sendet eine Übersicht der verfügbaren Inhalte, z.B. in Form einer Liste von Dokumententiteln, an das mobile Lesegerät.
5: In einer bevorzugten Ausführung wird im Menü des Gerätes angezeigt, dass lesbare Inhalte am Ort des Objektlokators zur Verfügung stehen. Dies wird entweder mittels eines Zeichens (Icons) neben einem bestehenden Menüpunkt oder durch Erscheinen eines zusätzlichen Menüpunktes auf dem Display des Lesegerätes signalisiert.
6: Der Nutzer des mobilen Lesegerätes entscheidet, ob und auf welchen der angebotenen Inhalte er zugreifen möchte. Er wählt beispielsweise einen Titel im Menü des Lesegerätes aus und fordert damit die Freigabe dieses Inhaltes beim Server an.
7: Der Server verschlüsselt den angeforderten Inhalt nach einer für diesen Objektlokator vorbestimmten Methode.
8: Der verschlüsselte Inhalt wird an das Lesegerät übertragen. Gleichzeitig wird eine Authentifizierungsanfrage für den Objektlokator an das Lesegerät gesendet. Damit kann sicher gestellt werden, dass sich das Lesegerät tatsächlich in Reichweite des Objektlokators befindet und keine gefälschte ID übermittelt wurde. In einer bevorzugten Ausführung wird dies mittels eines nach dem Stand der Technik bekannten Challenge-Response-Verfahrens realisiert. Denkbar sind hier aber auch andere bekannte Authentifizierungsverfahren (z.B. One-Time-Password, TAN), die entsprechend der Kritizität gewählt werden sollten.
9: Die Authentifizierungsanforderung wird von dem Lesegerät an den Objektlokator weitergeleitet.
10: In der Datenverarbeitungseinheit des Objektlokators wird die Antwort auf die Authentifizierungsaufforderung entsprechend der vorbestimmten Methode generiert.
11: Die Antwort wird vom Objektlokator in Form eines Funksignals, an das Lesegerät gesendet.
12: Bei erfolgreicher Authentifizierung kann der angefragte Inhalt mittels des vom Objektlokator übermittelten Antwortsignals entschlüsselt werden. Das ausgewählte Dokument kann dann geöffnet und gelesen werden.
   Der Inhalt wird einheiten- (also beispielsweise seiten- oder kapitel-)weise zur Verfügung gestellt. Das heißt, bei erstmaliger erfolgreicher Authentifizierung nach der Anforderung eines Dokumentes wird die erste Seite bzw. das erste Kapitel entschlüsselt. Beim Umblättern bzw. bei der Anwahl eines anderen (des nächsten) Kapitels werden die Schritte 6-11 erneut durchgeführt. Ist die Authentifizierung wieder erfolgreich, wird die nächste Seite bzw. das Kapitel übertragen, entschlüsselt und geöffnet.
   Möglich ist ebenfalls, eine bestimmte Zeitspanne festzulegen, innerhalb derer auf den übertragenen und entschlüsselten Inhalt zugegriffen werden kann, bevor dieser wieder verschlüsselt und eine erneute Authentifizierung erforderlich wird.
   Schlägt die Authentifizierung fehl, wird kein neuer Inhalt an das Lesegerät übertragen bzw. kann bereits übertragener Inhalt nicht entschlüsselt werden. Dies ist zum Beispiel dann der Fall, wenn sich das Lesegerät nicht in Reichweite des Objektlokators aufhält, also keine Signale mehr von ihm empfängt. Bereits erhaltener Inhalt lässt sich nicht erneut öffnen, da in Abwesenheit eines Objektlokators kein Schlüssel zur Entschlüsselung der Inhalte generiert werden kann. Der Zugriff auf den Inhalt wird verweigert oder der Inhalt gelöscht.

In weniger sicherheitsrelevanten Anwendungen kann auf das Authentifizierungsverfahren (Schritte 8-11) verzichtet werden. Der ortsgebunden beschränkt verfügbare Inhalt wird dann unmittelbar nach Übersendung der Objektlokator-ID vom Lesegerät an den Server an das Lesegerät übermittelt und kann dort mithilfe des vom Objektlokator ausgesendeten Signals direkt entschlüsselt und geöffnet werden. Der Inhalt steht dann zur Verfügung solange ein Signal von dem Objektlokator empfangen wird. Wird kein Signal mehr vom Objektlokator empfangen, bleibt der Inhalt verschlüsselt und wird somit der Zugriff auf den Inhalt gesperrt.

Um die Sicherheit des Systems zu erhöhen, können auch mehrere Objektlokatoren an einem Ort angebracht sein. Beschränkt verfügbarer Inhalt kann dann nur bezogen werden, wenn von allen Objektlokatoren ein valides Signal empfangen wird. Hierbei können verschiedene Technologien kombiniert werden, so z.B. Lichtsignale und Funksignale. Zusätzlich oder ersatzweise kann auch ein vom Lesegerät ausgesendetes GPS-Signal zur exakten Bestimmung und Validierung des Aufenthaltsortes hinzugezogen werden.

In einer Ausführung des Verfahrens kann, wenn kein Signal vom Objektlokator mehr empfangen wird, die Übersicht der Inhalte im Menü des Lesegerätes verbleiben, die Dokumente können aber nicht geöffnet werden, da bei einer entsprechenden Anfrage die Authentifizierung fehlschlägt und kein Schlüssel zum Öffnen der Dokumente generiert werden kann, was beispielsweise durch ein Zeichen (Icon) im Menü angezeigt wird. In diesem Fall ist es dem Nutzer des Lesegerätes überlassen, die Liste bzw. Menüpunkte selbständig zu löschen.

In einer bevorzugten Ausführung wird der Inhalt in dem Fall, dass die Authentifizierung fehlschlägt, vollständig aus dem Datenspeicher des Lesegerätes und auch der Menüpunkt bzw. die Liste der ortsgebunden beschränkt verfügbaren Inhalte gelöscht, sobald die Authentifizierung fehlschlägt und die Inhalte nicht entschlüsselt werden können. Als besonders sichere Methoden zum Löschen von Daten empfiehlt sich das mehrfache Überschreiben dieser.

Des Weiteren kann die Löschung der Inhalte, der Liste bzw. des Menüpunktes erst dann im Gerät vorgenommen werden, sollte die Authentifizierung mehrmals nach einer bestimmten Anzahl von Versuchen oder nach einer bestimmten Zeit fehlschlagen.

Ebenso kann ein Zeitpunkt festgelegt werden, ab dem ortsbeschränkte Inhalte wieder verschlüsselt oder aus dem Datenspeicher des Lesegerätes gelöscht werden.

Ein Anwendungsszenario für das erfindungsgemäße System ist im Folgenden beschrieben:
Ein Unternehmen oder eine Behörde stellt Informationen für Mitarbeiter auf einem Server bereit. Das Unternehmen oder die Behörde definiert weiterhin die Orte bzw. Räume, an denen Mitarbeiter Zugriff auf die bereitgestellten Informationen haben sollen, wie beispielsweise Büros, Konferenzräume oder auch das gesamte Gebäude mit oder ohne Außenanlagen. Zu diesem Zweck werden an diesen Orten bzw. in diesen Räumen Objektlokatoren angebracht, die beispielsweise ein Funksignal mit begrenzter Reichweite ausstrahlen. Die Identität eines jeden angebrachten Objektlokators ist eindeutig in diesem Funksignal codiert und auf dem Server abgelegt und wird dort mit einem Verweis auf die an dem von dem Objektlokator markierten Ort beschränkt verfügbaren Inhalte versehen.

Ein Nutzer (Mitarbeiter des Unternehmens oder der Behörde oder ansonsten Berechtigter) des Systems ist mit einem mobilen Lesegerät ausgestattet. In einer denkbaren Ausführung des mobilen Lesegerätes muss der Nutzer sich zunächst bei diesem identifizieren, beispielsweise durch Eingabe einer Zahlenkombination, Fingerabdruck, Irisscan etc. Sende- und Empfangseinheiten, die zur Kommunikation mit Objektlokatoren und Server verwendet werden, werden daraufhin aktiv.

Gelangt das mobile Lesegerät in die Reichweite eines Objektlokators, empfängt es dessen Funksignal und somit seine ID. Diese Kennung leitet das Lesegerät zum Beispiel per Mobilfunk oder WLAN an den Server weiter. Der Server ermittelt die mit dieser ID verknüpften Informationen und Inhalte und sendet eine Übersicht der ortsgebunden beschränkt verfügbaren Inhalte an das Lesegerät. Im Menü des Lesegerätes wird dem Nutzer angezeigt, dass ortsgebunden beschränkt Inhalte zur Verfügung stehen und ausgewählt werden können. Zu diesem Zeitpunkt wird nur diese Übersicht angezeigt, der Inhalt selbst ist noch nicht verfügbar.

Der Nutzer wählt ein Dokument in der Liste an und bestätigt seine Auswahl beispielsweise durch Knopfdruck oder Berühren des Displays. Der Server erhält die Anfrage, das ausgewählte Dokument freizugeben, worauf dieser den angefragten Inhalt nach einer vorbestimmten Methode verschlüsselt und ein festgelegtes Authentifizierungsverfahren zwischen Lesegerät und Objektlokator initiiert. Damit soll sichergestellt werden, dass sich ein mobiles Lesegerät tatsächlich in der Reichweite eines bestimmten Objektlokators befindet und keine gefälschte ID an den Server übersendet wurde. Dieses Authentifizierungsverfahren kann jede Art der Authentifizierung, die nach dem Stand der Technik bekannt ist, sein, und muss von der Behörde bzw. dem Unternehmen entsprechend seiner Sicherheitsanforderungen ausgewählt werden. In einer bevorzugten Ausführung wird dies mittels eines Challenge-Response-Verfahrens realisiert. Das heißt der Server sendet eine Challenge über das Lesegerät an den Objektlokator, der daraufhin eine Response generiert und an das Lesegerät sendet. Es können aber auch andere bekannte Authentifizierungsverfahren (z.B. One-Time-Password, TAN) zum Einsatz kommen, die entsprechend der Kritizität gewählt werden sollten. Ebenso kann die Art der Verschlüsselung entsprechend festgelegt werden. Die Richtlinien und Werte zur Durchführung der Authentifizierung sind also nur dem Server und den Objektlokatoren bekannt.

Bei erfolgreicher Authentifizierung kann der ausgewählte Inhalt auf dem Lesegerät entschlüsselt werden. Der Inhalt wird einheiten- (bspw. seiten- oder kapitel-)weise übertragen. Das heißt der Nutzer kann zunächst die erste Seite bzw. das erste Kapitel des angeforderten Dokumentes öffnen. Ein Umblättern bzw. die Auswahl des nächsten Kapitels ist mit dem erneuten Senden einer Anfrage an den Server verbunden, der dann wiederum die Verschlüsselung vornimmt und die Authentifizierung einleitet.

Die Authentifizierung lässt sich zusätzlich an die Identität des Nutzers bzw. des Lesegerätes knüpfen, so dass der ortsgebunden beschränkt verfügbare Inhalt auch an Personen oder Personengruppen gebunden werden kann.

Verlässt der Nutzer den vorbestimmten Raum bzw. befindet sich nicht an dem durch die Objektlokator-ID gekennzeichneten Ort, dann empfängt das Lesegerät keine Signale mehr von diesem. Das Lesegerät erhält in diesem Fall keine gültige Antwort für das Authentifizierungsverfahren und verliert den Zugriff auf bereits geöffnete und weitere Seiten des Dokuments. Die Übersicht über die ortsgebunden beschränkt verfügbaren Inhalte sowie die Inhalte selbst werden aus dem Datenspeicher des Lesegerätes gelöscht. Hierbei ist es denkbar, eine zeitliche Verzögerung zwischen Signalverlust und Löschung des Inhaltes vorzusehen, um zu verhindern, dass Inhalte im Falle von kurzfristigen Signalstörungen gelöscht werden.

In einer alternativen Ausführungsform kann als Objektlokator auch eine Lichtquelle, z.B. ein Infrarotleuchtmittel dienen. Das abgestrahlte Signal würde dann mittels eines entsprechenden Sensors im tragbaren Lesegerät erfasst werden. Weitere Möglichkeiten sind 2D oder 3D Barcodes, die mittels entsprechender bildverarbeitender Technologie vom Lesegerät erfasst werden können. Eine weitere Alternative wäre ein Objektlokator, der ein Ultraschallsignal aussendet, welches von einem entsprechenden Mikrofon im tragbaren Lesegerät erkannt wird.

In besonders sicherheitsrelevanten Bereichen kann auch eine Kombination mehrerer Objektlokatoren angewendet werden. So könnte beispielsweise ein Lichtsignal mit begrenzter Reichweite einen ersten Objektlokator darstellen, der durch einen zweiten Objektlokator, beispielsweise einem Funksignal, verifiziert wird.

Weitere Anwendungsmöglichkeiten für das hier vorgestellte System bestehen beispielsweise in Bibliotheken und Buchhandlungen. So können innerhalb eines Bibliotheksgebäudes Dokumente, z.B. Buchinhalte zur Verfügung gestellt werden. Der Bibliotheksnutzer kann unter Verwendung des erfindungsgemäßen Systems innerhalb der Bibliothek die gewünschten Bücher mittels eines tragbaren Lesegerätes suchen und darin lesen, solange er sich in den Räumen der Bibliothek aufhält. Die ID der Objektlokatoren kann beispielsweise auf dem Server mit der entsprechenden Abteilung und den dazugehörigen Büchtiteln, die sich dort befinden, verknüpft sein. Wenn der Nutzer das Bibliotheksgebäude wieder verlässt, wird der Zugang zu den Inhalten wieder gelöscht, so dass keinerlei Urheberrechtsverletzungen auftreten. Entsprechende Ausgestaltungen können für Buchhandlungen verwendet werden, bei denen der Nutzer Leseproben zur Verfügung gestellt bekommt, die wieder gelöscht werden, wenn der Nutzer die Räume der Buchhandlung wieder verlässt. Wenn der Nutzer ein Buch kaufen möchte, kann er dies auf klassischem Wege tun oder ein Buch in digitaler Form erwerben.

Eine weitere Anwendung des erfindungsgemäßen Systems kann darin bestehen, dass in einem Warteraum, z.B. einer Bahnhofshalle, einer Flughafenlounge oder Arztpraxis, Zeitschriften, Bücher oder Broschüren zur ortsbeschränkten Anzeige zur Verfügung gestellt werden.

### Literaturnachweise:

[1] US 2010/0190513A1
[2] Spasojevic M., Kindberg T.: A Study of an Augmented Museum Experience. HP techreport. 19.07.2001
[3] Schwieren J., Vossen, G.: Implementing Physical Hyperlinks for Mobile Applications using RFID Tags. IDEAS 2007. September 2007.
[4] Surminen J.M. et al: Location-based DRM using WiFi Access Points. ISCIT Symposium07. October 2007

## Patentansprüche

1. Verfahren zur ortsbeschränkten Anzeige lesbarer Inhalte auf einem mobilen Lesegerät, **gekennzeichnet durch** folgende Verfahrensschritte:
- Ein Objektlokator sendet ein Signal aus, das ihn eindeutig identifiziert und das vom Lesegerät empfangen wird, sobald es sich in dessen Reichweite aufhält.
- Das Lesegerät übermittelt die empfangene Identität des Objektlokators an einen Server und sendet gleichzeitig eine Anfrage zu den unter dieser ID verfügbaren Inhalte an den Server.
- Der Server ermittelt anhand der Objektlokator-ID die unter dieser ID abgelegten beschränkt verfügbaren Inhalte.
- Der Server verschlüsselt den Inhalt nach einer für den Objektlokator vorbestimmten Methode.
- Der Server sendet den verschlüsselten Inhalt an das Lesegerät. Gleichzeitig wird eine Authentifizierungsanfrage für den Objektlokator an das Lesegerät gesendet.
- Die Authentifizierungsanfrage wird von dem Lesegerät an den Objektlokator weitergeleitet.
- Der Objektlokator sendet die Antwort auf die Authentifizierungsanfrage an das Lesegerät.
- Mittels der Antwort vom Objektlokator kann der Inhalt auf dem Lesegerät entschlüsselt und geöffnet werden

2. Verfahren zur ortsbeschränkten Anzeige lesbarer Inhalte auf einem mobilen Lesegerät nach Anspruch 1, **dadurch gekennzeichnet, dass** der Objektlokator ein ihn eindeutig identifizierendes Signal erst dann aussendet, wenn er zuvor ein Signal des Lesegerätes empfangen hat.

3. Verfahren zur ortsbeschränkten Anzeige lesbarer Inhalte auf einem mobilen Lesegerät gemäß den Ansprüchen 1 bis 2, **dadurch gekennzeichnet, dass** das vom Objektlokator ausgesendete Signal veränderlich sein kann.

4. Verfahren zur ortsbeschränkten Anzeige lesbarer Inhalte auf einem mobilen Lesegerät gemäß den Ansprüchen 1 bis 3, **dadurch gekennzeichnet, dass** der Server nach Erhalt der Objektlokator-ID zunächst eine Übersicht des beschränkt verfügbaren Inhaltes an das Lesegerät sendet, aus der der Nutzer des Lesegerätes auswählen kann, welcher Inhalt vom Server an das Lesegerät übertragen werden soll.

5. Verfahren zur ortsbeschränkten Anzeige lesbarer Inhalte auf einem mobilen Lesegerät, gemäß den Ansprüchen 1 bis 4, **dadurch gekennzeichnet dass** der ortsbeschränkt verfügbare Inhalt einheitenweise vom Server an das Lesegerät übertragen wird, und bei der Anwahl einer weiteren Einheit der Vorgang der Authentifizierung erneut erforderlich ist.

6. Verfahren zur ortsbeschränkten Anzeige lesbarer Inhalte auf einem mobilen Lesegerät gemäß den Ansprüchen 1 bis 5, weiterhin **dadurch gekennzeichnet, dass** der ortsbeschränkt verfügbare Inhalt für eine bestimmte Zeit auf dem Lesegerät angezeigt wird, bevor eine erneute Authentifizierung vom Objektlokator gefordert wird.

7. Verfahren zur ortsbeschränkten Anzeige lesbarer Inhalte auf einem mobilen Lesegerät nach einem oder mehreren der Ansprüche 1 bis 6, **dadurch gekennzeichnet, dass** der Inhalt nachdem kein Signal mehr vom Objektlokator empfangen wird, aus dem Speicher des Lesegerätes gelöscht wird.

8. Verfahren zur ortsbeschränkten Anzeige lesbarer Inhalte auf einem mobilen Lesegerät nach einem oder mehreren der Ansprüche 1 bis 6, **dadurch gekennzeichnet, dass** der Inhalt nachdem kein Signal mehr vom Objektlokator empfangen wird, in verschlüsselter Form im Speicher des Lesegerätes verbleibt.

9. Verfahren zur ortsbeschränkten Anzeige lesbarer Inhalte auf einem mobilen Lesegerät nach einem oder mehreren der Ansprüche 1 bis 8, **dadurch gekennzeichnet, dass** der Erhalt von ortsbeschränkten Inhalten an eine Nutzerberechtigung gebunden wird, wobei der Nutzer anhand einer Gerätekennung des mobilen Lesegeräte identifiziert wird.

10. Verwendung eines Systems bestehend aus einem oder mehreren Objektlokatoren, Servern und mobilen Lesegeräten zur Durchführung des Verfahrens zur ortsbeschränkten Anzeige lesbarer Inhalte auf einem mobilen Lesegerät nach einem oder mehreren der Ansprüche 1 bis 9.

11. Verwendung eines Systems bestehend aus einem oder mehreren Objektlokatoren, Servern und mobilen Lesegeräten zur Durchführung des Verfahrens zur ortsbeschränkten Anzeige lesbarer Inhalte auf einem mobilen Lesegerät gemäß Anspruch 10, **dadurch gekennzeichnet, dass** Server und Objektlokator in einem Gerät integriert sind.

## Claims

1. A method for displaying readable contents in a location-restricted manner on a mobile reading device, **characterized by** the following steps:
- An object locator sends a signal that identifies it in a unique manner and that is received by the reading device as soon as it is within the range thereof.
- The reading device transmits the received identity of the object locator to a server and simultaneously sends a request for the contents available under this ID to the server.
- By using the object locator ID, the server determines the contents available in a restricted manner and stored under this ID.
- The server encrypts the contents using a method predetermined for the object locator.
- The server sends the encrypted contents to the reading device. At the same time, a request for authentication for the object locator is sent to the reading device.
- The request for authentication is forwarded from the reading device to the object locator.
- The object locator sends the response to the request for authentication to the reading device.
- By means of the response from the object locator, the contents can be decrypted and opened on the reading device.

2. The method for displaying readable contents in a location-restricted manner on a mobile reading device according to claim 1, **characterized in that** the object locator sends a signal identifying it in a unique manner only after it has previously received a signal of the reading device.

3. The method for displaying readable contents in a location-restricted manner on a mobile reading device according to claims 1 to 2, **characterized in that** the signal sent by the object locator may be variable.

4. The method for displaying readable contents in a location-restricted manner on a mobile reading device according to claims 1 to 3, **characterized in that** after receiving the object locator ID, the server first sends a survey of the contents available in a restricted manner to the reading device, from which survey the user of the reading device can choose, which contents are to be transmitted from the server to the reading device.

5. The method for displaying readable contents in a location-restricted manner on a mobile reading device according to claims 1 to 4, **characterized in that** the contents available in a location-restricted manner are transferred in units from the server to the reading device, and that the process of authentication is required again, when another unit is selected.

6. The method for displaying readable contents in a location-restricted manner on a mobile reading device according to claims 1 to 5, further **characterized in that** the contents available in a location-restricted manner are displayed for a certain time on the reading device, before another authentication of the object locator is required.

7. The method for displaying readable contents in a location-restricted manner on a mobile reading device according to one or more of claims 1 to 6, **characterized in that**, when no signal is received from the object locator anymore, the contents are deleted from the memory of the reading device.

8. The method for displaying readable contents in a location-restricted manner on a mobile reading device according to one or more of claims 1 to 6, **characterized in that**, when no signal is received from the object locator anymore, the contents are kept in an encrypted form in the memory of the reading device.

9. The method for displaying readable contents in a location-restricted manner on a mobile reading device according to one or more of claims 1 to 8, **characterized in that** the receipt of location-restricted contents is bound to a user authorization, the user being identified by a device identifier of the mobile reading device.

10. A use of a system consisting of one or more object locators, servers, and mobile reading devices for carrying out the method for displaying readable contents in a location-restricted manner on a mobile reading device according to one or more of claims 1 to 9.

11. A use of a system consisting of one or more object locators, servers, and mobile reading devices for carrying out the method for displaying readable contents in a location-restricted manner on a mobile reading device according to claim 10, **characterized in that** the server and the object locator are integrated in one device.

## Revendications

1. Procédé d'affichage de contenus lisibles d'une façon restreinte dans l'endroit sur un dispositif de lecture mobile, **caractérisé par** les étapes suivantes:
- Un localisateur d'objets transmet un signal qui l'identifie d'une façon unique et qui est reçu par le dispositif de lecture dès qu'il se trouve dans la portée de celui-ci.
- Le dispositif de lecture transmet l'identité reçue du localisateur d'objets à un serveur et en même temps transmet une demande au sujet des contenus disponibles sous cet identifiant au serveur.
- En utilisant l'identifiant du localisateur d'objets, le serveur détermine les contenus disponibles d'une façon restreinte et mémorisés sous cet identifiant.
- Le serveur chiffre les contenus en utilisant un procédé prédéterminé pour le localisateur d'objets.
- Le serveur transmet les contenus chiffrés au dispositif de lecture. En même temps, une demande au sujet de l'authentification pour le localisateur d'objets est transmise au dispositif de lecture.
- La demande au sujet de l'authentification est transmise à partir du dispositif de lecture au localisateur d'objets.
- Le localisateur d'objets transmet la réponse à la demande au sujet de l'authentification au dispositif de lecture.
- Au moyen de la réponse du localisateur d'objets, le contenu peut être déchiffré et ouvert dans le dispositif de lecture.

2. Procédé d'affichage de contenus lisibles d'une façon restreinte dans l'endroit sur un dispositif de lecture mobile selon la revendication 1, **caractérisé en ce que** le localisateur d'objets transmet un signal l'identifiant d'une façon unique seulement après qu'il ait reçu auparavant un signal du dispositif de lecture.

3. Procédé d'affichage de contenus lisibles d'une façon restreinte dans l'endroit sur un dispositif de lecture mobile selon la revendications 1 à 2, **caractérisé en ce que** le signal transmis par le localisateur d'objets peut être variable.

4. Procédé d'affichage de contenus lisibles d'une façon restreinte dans l'endroit sur un dispositif de lecture mobile selon la revendications 1 à 3, **caractérisé en ce qu'**après la réception de l'identifiant du localisateur d'objets, le serveur d'abord transmet une vue d'ensemble du contenu disponible d'une façon restreinte au dispositif de lecture, à partir de laquelle l'utilisateur du dispositif de lecture peut choisir le contenu à être transmis à partir du serveur au dispositif de lecture.

5. Procédé d'affichage de contenus lisibles d'une façon restreinte dans l'endroit sur un dispositif de lecture mobile selon la revendications 1 à 4, **caractérisé en ce que** le contenu disponible d'une façon restreinte dans l'endroit est transféré par unités à partir du serveur au dispositif de lecture, et que le procédé d'authentification est nécessaire de nouveau, si une autre unité est choisie.

6. Procédé d'affichage de contenus lisibles d'une façon restreinte dans l'endroit sur un dispositif de lecture mobile selon la revendications 1 à 5, en outre **caractérisé en ce que** le contenu disponible d'une façon restreinte dans l'endroit est affiché pour un certain temps sur le dispositif de lecture, avant qu'une authentification nouvelle du localisateur d'objets soit nécessaire.

7. Procédé d'affichage de contenus lisibles d'une façon restreinte dans l'endroit sur un dispositif de lecture mobile selon une ou plusieurs des revendications 1 à 6, **caractérisé en ce que**, si aucun signal n'est plus reçu à partir du localisateur d'objets, le contenu est effacé de la mémoire du dispositif de lecture.

8. Procédé d'affichage de contenus lisibles d'une façon restreinte dans l'endroit sur un dispositif de lecture mobile selon une ou plusieurs des revendications 1 à 6, **caractérisé en ce que**, si aucun signal n'est plus reçu à partir du localisateur d'objets, le contenu reste en une forme chiffrée dans la mémoire du dispositif de lecture.

9. Procédé d'affichage de contenus lisibles d'une façon restreinte dans l'endroit sur un dispositif de lecture mobile selon une ou plusieurs des revendications 1 to 8, **caractérisé en ce que** la réception de contenus restreints dans l'endroit est liée à une authentification de l'utilisateur, l'utilisateur étant identifié par un identifiant du dispositif de lecture mobile.

10. Utilisation d'un système consistant en un ou plusieurs localisateurs d'objets, serveurs, et dispositifs de lecture mobiles pour réaliser le procédé d'affichage de contenus lisibles d'une façon restreinte dans l'endroit sur un dispositif de lecture mobile selon une ou plusieurs des revendications 1 to 9.

11. Utilisation d'un système consistant en un ou plusieurs localisateurs d'objets, serveurs, et dispositifs de lecture mobiles pour réaliser le procédé d'affichage de contenus lisibles d'une façon restreinte dans l'endroit sur un dispositif de lecture mobile selon la revendication 10, **caractérisée en ce que** le serveur et le localisateur d'objets sont intégrés dans un seul dispositif.
